# EUROPEAN PATENT APPLICATION

(11) **EP 2 061 203 A1**
(43) Date of publication of application: **20.05.2009**
(21) Application number: 07291372.6
(22) Date of filing: 16.11.2007
(51) Int. Cl.: H04L 29/06

(54) **Method for establishing an IMS-session**

(71) Applicant: Alcatel Lucent, 75008 Paris (FR)
(72) Inventor: Wahl, Stefan, 71701 Schwieberdingen (DE); Oberle, Karsten, 68199 Mannheim (DE)
(74) Representative: LOUIS, PÖHLAU, LOHRENTZ

(57) **Abstract**

The invention concerns a method of establishing an IMS-session comprising at least one media-stream (1001) with a first terminal (21, 40, 40', 40". 40''') through an IP-packed based communication network (100), wherein the first terminal (21) is SIP-incapable. The IMS-session is established with a second, SIP-capable terminal (11) associated with a SIP-user (1). The second, SIP-capable terminal (11) sends at least one SIP-reinvite message (1002) comprising a network address of the first, SIP-incapable terminal (21) or a network address of a media gateway (31) associated with the first, SIP-incapable and IP-incapable terminal (40, 40', 40", 40"') as receiving address of at least one media-stream (1001) of the IMS-session. At least one media-stream (1001) of the IMS-session is transmitted to the first, SIP-incapable terminal (21) or the media gateway (31) through the IP-packed based communication network (100). Further SIP-signaling messages (1000, 2000) of the IMS-session with the second, SIP-capable terminal (11) associated with the SIP-user (1) are exchanged.

## Description

The present invention concerns a method of establishing an IMS-session comprising at least one media-stream with a first terminal associated with a SIP-user through an IP-packed based communication network, wherein the first terminal is IP-capable, but SIP-incapable and a SIP-capable terminal for executing said method.

Nowadays more and more applications that interact with two or more users are available. Typical examples are IMS-services (IMS = Internet Multimedia services), like Voice over IP (IP = Internet Protocol), Voice over IP conferencing or video conferencing, or video on demand services, i.e. real-time data-streams associated with these services are transported through IP-packet based communication networks. IMS-service providers render these valuable services to users, i.e, subscribers to these IMS-services. The users are further accounted for the services provided. The IMS-services comprise in general one or more media-streams mainly transmitted via the RTP protocol (RTP = real-time protocol). These media-streams are audio- or video-streams. The SIP protocol (SIP = Session Initiation Protocol) is used to initiate these real-time sessions. Typically, a subscriber of such an IMS-service receives that service on his SIP-capable mobile phone or on his SIP- and IP-capable PC (PC = Personal Computer).

At the present a SIP-infrastructure is not always or at all places available. For instance the subscriber watches a video provisioned by a video on demand IMS-service provider on his mobile phone. The subscriber intends to transfer the provisioned video on a TV-set, since the TV-set provides a more convenient display of the video on a high-resolution TV-screen than on a low-resolution display of the mobile phone. An IMS-session transfer requires that both terminals involved, here the mobile phone and the TV-set, provide a SIP-user agent to realize the IMS-session transfer. SIP-session transfers are described for instance in "The virtual device: expanding wireless communication services through service discovery and session mobility" of Shacham et. al. published "Wireless And Mobile Computing, Networking And Communications, 2005. (WiMob'2005), IEEE International Conference on" pages 73- 81 Vol. 4.

Therefore it is the object of the present invention to provide a method for establishing an IMS-session with an SIP-incapable terminal.

The object of the present invention is achieved by a method of establishing an IMS-session comprising at least one media-stream with a first terminal through an IP-packed based communication network, wherein the first terminal is SIP-incapable, whereby the IMS-session is established with a second, SIP-capable terminal associated with a SIP-user, the second, SIP-capable terminal sends at least one SIP-reinvite message comprising a network address of the first, SIP-incapable terminal or a network address of a media gateway associated with the first, SIP-incapable and IP-incapable terminal as receiving address of at least one media-stream of the IMS-session, and transmits said at least one media-stream of the IMS-session to the first, SIP-incapable terminal or a media gateway through the IP-packed based communication network and exchanging the SIP-signaling messages of the IMS-session with the second, SIP-capable terminal associated with the SIP-user. The object of the present invention is also achieved by a SIP-capable terminal with a communication unit for exchanging SIP messages via a communication network for establishing an IMS-session, whereby the terminal has a control unit adapted to establish an IMS-session comprising at least one media-stream with the SIP-capable terminal associated with a SIP-user. send at least one SIP-reinvite message comprising a network address of a SIP-incapable terminal or a network address of a media gateway associated with the first, SIP-incapable and IP-incapable terminal as receiving address of at least one media stream of the IMS-session, whereby said at least one media-stream of the IMS-session to the first, SIP-incapable terminal or the media gateway is transmitted through the IP-packed based communication network and the SIP-signaling messages of the IMS-session are still exchanged with the SIP-capable terminal associated with the SIP-user.

The present invention enables IMS-session transfer to terminals which do not provide any SIP-functionality, but are yet IP-capable. Therefore users which are equipped with a SIP-capable terminal, can control remotely media-streams of IMS-services to be rendered at SIP-capable terminals as well as at SIP-incapable terminals. The control of the IMS-session can be realized for instance by means of a user-interface at the SIP-capable terminal. The provisioning of IMS-services is therefore made available to none-IMS users. The established IMS-infrastructure requires no adaptation, because the present invention is an application layer service which resides on top of the IMS-control layer. The SIP-user, i.e. the subscriber to the IMS-session, stays always in control of the IMS-session, even when media-streams of the IMS-session are directed to one or more different terminals for presentation.

Further advantages are achieved by embodiments of the invention indicated by the dependent claims.

According to a preferred embodiment of the invention the first terminal is IP-capable, but SIP-incapable.

According to a preferred embodiment of the invention data about the first terminal together with the network address of the media gateway is sent within the at least one SIP-reinvite message to the media gateway. At least one media-stream of the IMS-session is transmitted to the media gateway. The media gateway converts the at least one media-stream according to the data about the first terminal to a broadcast network format adapted to the first terminal. The media gateway transmits the converted media-stream to the first terminal.

According to a preferred embodiment of the invention the second, SIP-capable terminal receives via a user interface data about the network address of the first, SIP-incapable terminal. The second, SIP-capable terminal uses the received data for determining or selecting the network address of the first, SIP-incapable terminal as the receiving address of said at least one media-stream of the IMS-session. Preferably the user interface resides at the second, SIP-capable terminal. The user interface may be a graphical user interface which allows the SIP-user to select via scroll-down lists or via entering the network address of the first, SIP-incapable terminal. In order to select the network address of the first, SIP-incapable terminal a database assigned to the SIP-user is provided, for instance as a service of the IMS-service provider or residing locally at the second, SIP-capable terminal, or can be queried by means of the first, SIP-incapable terminal.

According to a further preferred embodiment of the invention the second, SIP-capable terminal provides a user interface for selecting and/or for entering IMS-session data, in particular data about a codec, a quality of service or bandwidth, of the at least one media stream of the IMS-session. The second, SIP-capable terminal inserts one or more of the selected and/or entered IMS-session data in the at least one SIP-reinvite message. As in the foregoing preferred embodiment the user interface can reside at the second, SIP-capable terminal. The user interface is preferably a graphical user interface which allows the SIP-user to select via scroll-down lists or via entering the IMS-session data, like the codec, the quality of service or bandwidth, of at least one media-stream of the IMS-session. In order to select the IMS-session data a database assigned to the SIP-user is provided, for instance as a service of the IMS-service provider or residing locally at the second, SIP-capable terminal.

According to a preferred embodiment of the invention the second, SIP-capable terminal holds data about one or more first, SIP-incapable terminals. Therefore the second, SIP-capable terminal can be used like an address book for one or more first, SIP-incapable terminals. The data about one or more first, SIP-incapable terminals can also be included into a preexisting address book at the second, SIP-capable terminal if the second, SIP-capable terminal is formed as a mobile phone, a PC or a PDA (PDA = Personal Digital Assistant). The data about one or more first, SIP-incapable terminals comprises data about a network address and/or IMS-session data, in particular data about a codec, a quality of service or bandwidth, assigned to the respective SIP-incapable terminal. By means of a user interface one or more first, SIP-incapable terminals can be selected. Media-streams of IMS-session which comprise more than one media-streams, like audio- and video-streams of video conferencing over IP, can be redirected to different first, SIP-incapable terminals. Moreover it is possible to adapt e.g. the codec, the quality of service or the bandwidth of the media-streams associated with one or more first, SIP-incapable terminals autonomously by the second, SIP-capable terminal. Further it is possible to change and/or modify the codec, the quality of service or the bandwidth of the media-streams associated with one or more first, SIP-incapable terminals upon user-input by means of the user-interface. Thereby a lower or a higher bandwidth and/or quality of service can be selected. It is possible to adjust IMS-session data or the IMS-session parameters for each specific first, SIP-incapable terminal where media-streams shall be presented. The second, SIP-capable terminal inserts data assigned to the selected one or more SIP-incapable terminals in the at least one SIP-reinvite message. Preferably the user-interface is realized as in the above mentioned embodiments.

According to a further preferred embodiment of the invention the second, SIP-capable terminal receives via a user interface data about two or more first, SIP-incapable terminals. Preferably, the user interface is realized like in one of the above embodiments. The second, SIP-capable terminal determines network addresses and media streams of the IMS-session associated with the two or more first, SIP-incapable terminals based on the received data. The second, SIP-capable terminal sends the network addresses of the two or more first, SIP-incapable terminals as the receiving addresses of the respective associated media-streams of the IMS-session with the at least one SIP-reinvite message for establishment of the IMS-session. Preferably a SIP-user agent at the second, SIP-capable terminal accesses data, which are held locally or remotely, e.g. a local address book or a database at the second, SIP-capable terminal, to map a name of a user associated with one or more first, SIP-incapable terminals to the network addresses of the two or more first, SIP-incapable terminals as the receiving addresses of the respective associated media-streams of the IMS-session.

According to a preferred embodiment of the invention an audio-stream of the IMS-session is transmitted to a first, SIP-incapable terminal, in particular a radio, a multi-channel audio system or a stereo, which is adapted to present the audio-stream. Furthermore, a video-stream of the IMS-session is transmitted to a further first, SIP-incapable terminal, in particular a TV-set, which is adapted to display the video-stream. For example, if the IMS-service provided is a video on demand service, the audio-stream of the IMS-service is transmitted to an IP-capable stereo and the video-stream is transmitted to an IP-capable display, like a IP-capable TV-set.

According to a further preferred embodiment of the invention the second, SIP-capable terminal receives via a user interface data for terminating the transmission of the at least one media stream of the IMS-session to the first, SIP-incapable terminal. The second, SIP-capable terminal sends a SIP-signaling message comprising data about the termination or rerouting of transmission of the at least one media-stream of the IMS-session to the first, SIP-incapable terminal and/or vice versa. An IMS-server terminates the transmission of the at least one media stream of the IMS-session to the first, SIP-incapable terminal. Thereby it is always guaranteed that the SIP-user, i.e. the subscriber to the IMS-service, who is accounted for the IMS-service, is able to control the IMS-session.

According to a preferred embodiment of the invention the first, SIP-incapable terminal presents an identification associated with the IMS-session. The identification is assigned to the SIP-user, i.e. the subscriber to the IMS-session. The identification is a media-stream which is presented at the first, SIP-incapable terminal. The media-stream can be an audio-stream, e.g. if the first, SIP-incapable terminal does not provide a display. The media-stream can also be a video-stream to be displayed at a display of the first, SIP-incapable terminal. The second, SIP-capable terminal receives a confirmation via a user interface. The receipt of the confirmation assures that the first, SIP-incapable terminal, i.e. the terminal to which the media-stream is directed as target, is correct. The second, SIP-capable terminal sends the at least one SIP-reinvite message upon receipt of the confirmation. Thereby the IMS-server, and also the IMS-service provider, receives a feedback upon successful redirecting the media-streams of the IMS-session to one or more first, SIP-incapable terminals, Moreover the SIP-user can notify a, preferably different, user assigned to the first, SIP-incapable terminal, similar as it is done by the use of a beeper or pager.

These as well as further features and advantages of the invention will be better appreciated by reading the following detailed description of presently preferred exemplary embodiments taken with the accompanying drawing of:
- Figure 1: shows a schematic sketch of communication system with an IMS-server according to the present invention.
- Figure 2: shows a flow diagram with various SIP-signaling and mediastream flows between interacting entities, whereby the IMS-session is originally initiated by a second, SIP-capable terminal.
- Figure 3: shows a schematic sketch of communication system with an IMS-server according to the present invention whereby a media gateway converts the media-stream for presentation of the media-stream at a SIP-incapable terminal.

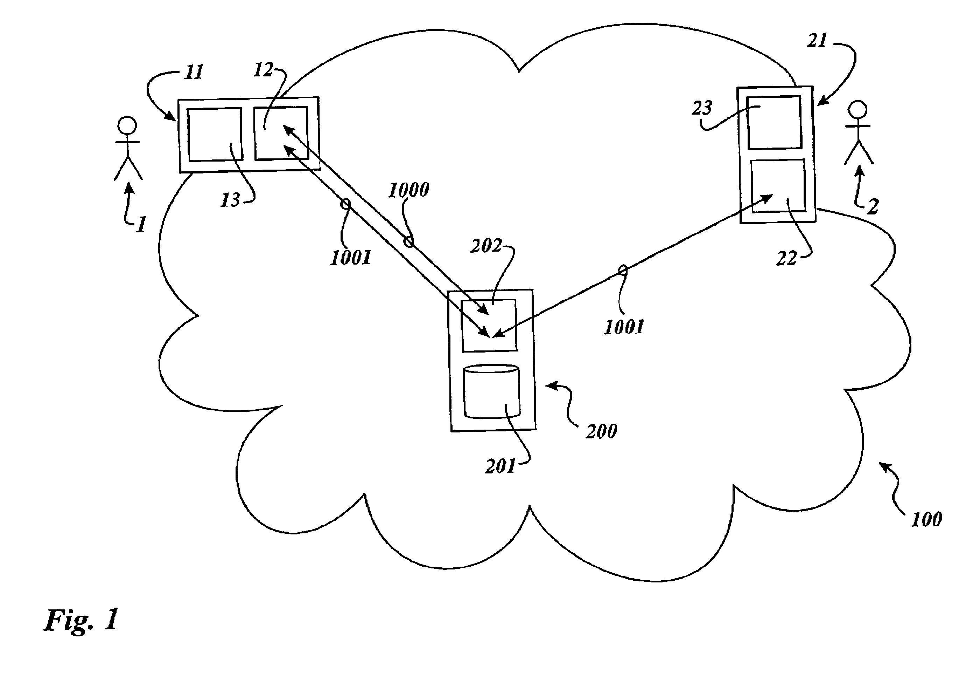

Figure 1 shows an IP-packet based communication network 100 with various interacting entities, i.e. a second, SIP-capable terminal 11 of a SIP-user 1, an IMS-server 200 of an IMS service provider and a first, SIP-incapable terminal 21 of a user 2. The SIP-user 1, i.e. the subscriber to the IMS-session provided by the IMS-server 200, and the user 2 can be identical.

The communication network 100 is an IP-packet based network. The IP-packet based communication network 100 comprises a plurality of network nodes, e.g. routers, servers, home subscriber servers, roaming servers, application servers as well as an IP-Multimedia Subsystem, etc., The network nodes provide an IP-routing infrastructure as well as a SIP-infrastructure, e.g. SIP-call servers, SIP-registrars, SIP session border controllers, etc.. The SIP-infrastructure of the IP-packet based communication network 100 includes hardware means and/or software means for user identification, user and service registration, user and service authentication, as well as for routing and redirecting SIP-signaling messages.

The second, SIP-capable terminal 11 comprises a display 13 and communication means 12 providing IP- and SIP-functionality. Furthermore the second, SIP-capable terminal 11 holds a database for storing SIP-user preferences and/or user-data, The first, SIP-incapable terminal 21 comprises a display 23 and communication means 22 providing IP-functionality only.

Furthermore the display 13 of the second, SIP-capable terminal 11 as well as the display 23 of the first, SIP-incapable terminal 21 provide the functionality to present audio-streams and/or video/streams.

Preferably, the user-data held at the second, SIP-capable terminal 11 comprises data arranged similar as data of an address-book database. Thereby it is possible to map one or more user 2 assigned to one or more first, SIP-incapable terminals 21 to network-addresses and/or terminal-specific attributes and/or IMS-session data, like bandwidth limits, display resolutions, available codecs, etc..

The IMS-server 200 comprises a controller, a database 201, and communication means 202. The IMS-server 200 provides functionality for accounting and for communicating via the SIP-protocol through the IP-packet based communication network 100.

The communication means 12, 202, 22 of the second, SIP-capable terminal 11, the IMS-server 200, and the first, SIP-incapable terminal 21 respectively comprise the necessary hardware and software means for communicating via the IP-packed based communication network 100. The communication means 12, 202, 22, are for instance an Ethernet card, a modem, a wireless local area network card, and a TCP/IP stack (TCP = transmission control protocol).

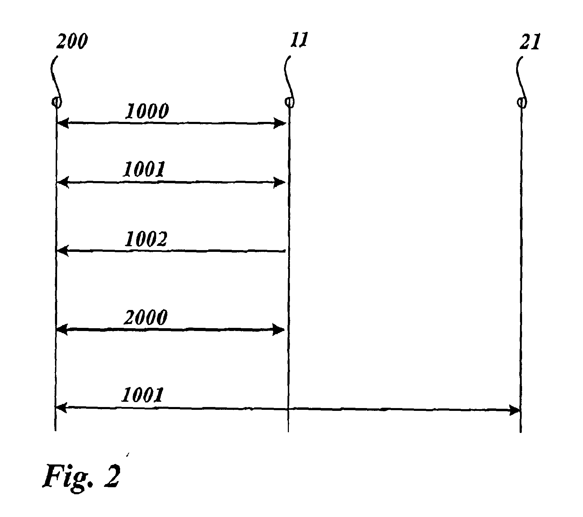

Figure 2 shows a respective sequence of SIP-signaling and media-stream flows between the interacting entities.

For example the SIP-user 1 is subscribed to a video on demand service provided by an IMS-session provider. For watching a video on demand, the SIP-user 1 establishes an IMS-session with a second, SIP-capable terminal 11, e.g. his mobile phone 11, associated with the SIP-user. For establishment of the IMS-session SIP-signaling messages 1000 are exchanged with the IMS-server 200 of the IMS-service provider. The IMS-server sends the media-stream 1001 to the second, SIP-capable terminal 11. The media-stream 1001 is transported through the IP-packed based communication network 100 according to the RTP-protocol. In the present example the media-stream 1001 comprises actually an audio-stream and a video-stream. The media-stream 1001 is rendered at the display 13 of the second, SIP-capable terminal 11. The SIP-user 1 watches the video on demand on his second, SIP-capable terminal 11, i.e. his mobile phone 11.

The SIP-user 1 visits his friend, i.e. the user 2. The user 2 has a TV-set, i.e. the first, SIP-incapable terminal 21. The TV-set 21 comprises a set-top box connected to the TV-set 21 to provide IP-functionality. The set-top box can be located internally or externally of the TV-set 21. Since the TV-set 21 provides a screen 23, i.e. the display 23, with a higher resolution than the display 13 of the mobile phone 11 and also provides a better audio-quality the SIP-user 1 wants to redirect the media-stream 1001 of his video on demand IMS-session to the TV-set 21, i.e. the first, SIP-incapable terminal 21.

In a next step, the SIP-user 1 invokes a user-interface at the mobile phone 21 in order the select and enter data about the network address of the first, SIP-incapable terminal 21, i.e. the TV-set 21, and IMS-session data, in particular data about a codec, a quality of service or bandwidth of the media-stream 1001 of the IMS-session. The SIP-user 1 selects and/or enters the data about the network address of the first, SIP-incapable terminal 21, i.e, the TV-set 21 and the IMS-session data. The second, SIP-capable terminal 11 comprises the above specified data in order to map one or more user 2 assigned to one or more first, SIP-incapable terminals 21 to network-addresses and/or terminal-specific attributes, like bandwidth limits, display resolutions, available codecs, etc.. The second, SIP-capable terminal 11 access the data stored at the second, SIP-capable terminal 11 for determining a network address of the first, SIP-incapable terminal 21, i.e. the TV-set 21, as the receiving address of said at least one media-stream, i.e. the audio-stream and the media-stream. Further the second, SIP-capable terminal 11 can access the IMS-session data held and assigned to the first, SIP-incapable terminals 21 to compare and reconcile with the IMS-session data selected and/or entered by the SIP-user.

Thereby it is possible to assure the correct presentation of the media-stream 1001 at the first, SIP-incapable terminal 21. I.e. the second, SIP-capable terminal 11 guarantees that the selected and/or entered IMS-session data lies within the bounds of the capabilities of the first, SIP-incapable terminal 21. In case that invalid IMS-session data has been selected and/or entered the second, SIP-capable terminal 11 can invoke a further user interface for requesting additional IMS-session data and/or a confirmation of the reconciled IMS-session data.

By means of the SDP-protocol (SDP = Session Description Protocol) the second, SIP-capable terminal 11 inserts the network address of the first, SIP-incapable terminal 21 as the receiving address of said at least one media-stream 1001, i.e. the audio- and the video-stream, in the body of a SIP-reinvite message 1002. Further the second, SIP-capable terminal 11 inserts the selected and/or entered IMS-session data in the body of said SIP-reinvite message 1002 by means of the SDP-protocol, For initiating the transmission of said at least one media-stream 1001 of the IMS-session to the first, SIP-incapable terminal 21 the SIP-reinvite message 1002 is sent to the IMS-server 200 of the IMS-session provider.

The IMS-server 200 evaluates said SIP-reinvite message 1002 and transmits the media-streams to the first, SIP-incapable terminal 21 through the IP-packed based communication network 100.

Preferably an identification associated with the IMS-session, e.g. a number, is displayed at the first, SIP-incapable terminal 21. The SIP-user 1 enters said identification by means of a user interface at the his mobile phone, i.e. the second, SIP-capable terminal 11. The input of the identification is considered as a confirmation for transmitting the video on demand, i.e. the media-stream 1001, to the first, SIP-incapable terminal 21. Upon receipt of the confirmation, the second. SIP-capable terminal 11 inserts the confirmation in a SIP-reinvite message 1002 or a SIP-signaling message 2000 and sends the SIP-reinvite message 1002 or the SIP-signaling message 2000 to the IMS-server 200 of the IMS-session provider. If the confirmation is not received at the IMS-server 200, the IMS-server 200 terminates the IMS-session and the transmission of the media-streams 1001. The IMS-server 200 terminates the IMS-session and the transmission of the media-streams 1001 too, if the confirmation does not correspond to the identification displayed at the first, SIP-incapable terminal 21.

Finally the SIP-user 1 wants to terminate the transmission of the at least one media-stream 1001, i.e. the audio- and the video-stream, to the first, SIP-incapable terminal 21 assigned to his friend, i.e. the user 2 or wants to reroute this transmission to the second, SIP-capable terminal 11. The SIP-user 1 invokes a user interface at the second, SIP-capable terminal 11 to select and/or enter data for rerouting or terminating the transmission of the at least one media-stream 1001 of the IMS-session to the first, SIP-incapable terminal 21. The second, SIP-capable terminal 11 inserts said data for rerouting or terminating the transmission in a SIP-signaling message 2000. The SIP-signaling message 2000 comprises said data for rerouting or terminating the transmission is sent to the IMS-server 200. Upon receipt of said SIP-signaling message 2000 the IMS-server reroutes or terminates the transmission of the media-streams 1001 to the first, SIP-incapable terminal 21. In case the rerouting of the media-stream 1001 is desired, the media-stream 1001 is transmitted to the second, SIP-capable terminal 11 or another first, SIP-incapable terminal.

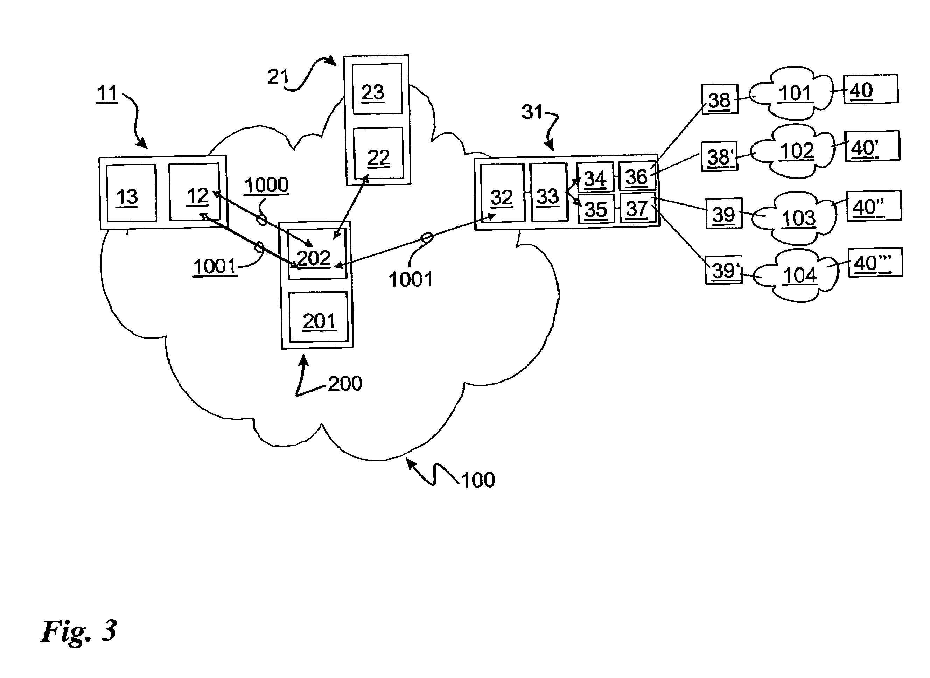

Figure 3 shows another preferred embodiment of the present invention whereby a media gateway 31 converts the media-stream 1001 for presentation of the media-stream 1001 at a SIP-incapable and IP-incapable terminal 40, 40', 40", 40"'. Data about the first terminal 40, 40', 40", 40'" is sent together with the network address of the media gateway 31 within the at least one SIP-reinvite message to the media gateway 31. The data about the first terminal 40, 40', 40", 40"' is personalized data comprising information about a analogue/digital broadcast Access Network, a SAT or a Cable Network, a user individual encryption key, a channel and a transport stream id etc.. Further the at least one media-stream 1001 of the IMS-session is transmitted to the media gateway 31. The media gateway 31 converts the media-stream 1001 according to the personalized data into the broadcast network format adapted to the first terminal 40, 40', 40", 40'" so that the first, SIP-incapable and IP-incapable terminal 40, 40', 40", 40"' is able to receive the content of the media-stream 1001 through the IP-packed based communication network and can display the content of the media-stream 1001. The media gateway 31 transmits the converted media-stream to the first terminal 40, 40', 40", 40"'.

The media gateway 31 performs well known adaptation and termination functions, like terminating RTP, converting to analogue signal if required, transcoding if required, and encrypting the stream. The media gateway 31 performs a function similar to the communication means 22 of the first terminal 21 of the foregoing embodiment. The link between the communication mean 22 and the display 23 of the foregoing embodiment is represented by the functions 38, 38', 39 and 39' and the display 23 corresponds to the components 40, 40', 40" and 40"'.

In particular the media gateway 31 provides communication means 32 which provide IP-functionality. The component 33 of the media gateway 31 terminates the RTP, The further functionality are provided by a conversion unit 34 for converting from codec X used in the RTP payload, e.g. H.263, H.264 etc., into analogue, e.g. PAL (PAL = Phase Alternating Line), by an optional conversion unit 35 for transcoding to MPEG2 or MPEG4 (MPEG = Movie Picture Experts Group), by analogue and/or digital encryption units 36 and 37, by modulator/upconverter units 38, 38' to broadcast frequencies and by a MPEG TS Multiplexer/modulator/upconvertor unit 39 (TS = transport stream).

The converted media-stream is displayed on the SIP-incapable and IP-incapable terminals 40, 40', 40" and 40"' whereby by the converted media-stream has been transmitted through a SAT broadcast network 101, e.g. ASTRA, a cable broadcast network 102, e.g. KabelBW, a SAT broadcast network 103, e.g. ASTRA digital, and/or a cable broadcast network 104, e.g. KabelBW digital.

## Claims

1. Method of establishing an IMS-session comprising at least one media-stream (1001) with a first terminal (21, 40, 40', 40", 40"') through an IP-packed based communication network (100), wherein the first terminal (21) is SIP-incapable,
whereby the method comprises the steps of:
establishing the IMS-session with a second, SIP-capable terminal (11) associated with a SIP-user (1),
sending, by the second, SIP-capable terminal (11), at least one SIP-reinvite message (1002) comprising a network address of the first, SIP-incapable terminal (21) or a network address of a media gateway (31) associated with the first, SIP-incapable and IP-incapable terminal (40, 40', 40", 40"') as receiving address of at least one media-stream (1001) of the IMS-session, and
transmitting said at least one media-stream (1001) of the IMS-session to the first, SIP-incapable terminal (21) or the media gateway (31) through the IP-packed based communication network (100) and exchanging the SIP-signaling messages (1000, 2000) of the IMS-session with the second, SIP-capable terminal (11) associated with the SIP-user (1).

2. Method of establishing an IMS-session according to claim 1,
wherein the first terminal (21) is IP-capable, but SIP-incapable.

3. Method of establishing an IMS-session according to claim 1,
wherein the Method comprises the steps of:
sending data about the first terminal (21, 40, 40', 40", 40"') together with the network address of the media gateway (31) within the at least one SIP-reinvite message to the media gateway (31),
transmitting the at least one media-stream (1001) of the IMS-session to the media gateway (31),
converting, by the media gateway (31), the at least one media-stream (1001) according to the data about the first terminal (21, 40, 40', 40", 40"') to a broadcast network format adapted to the first terminal (21) and
transmitting, by the media gateway (31), the converted media-stream to the first terminal (21, 40, 40', 40", 40"').

4. Method of establishing an IMS-session according to claim 1,
whereby the method comprises the further steps of:
receiving via a user interface at the second, SIP-capable terminal (11) data about the network address of the first, SIP-incapable terminal (21) and
using the received data for determining or selecting the network address of the first, SIP-incapable terminal (21) as the receiving address of said at least one media-stream (1001) of the IMS-session.

5. Method of establishing an IMS-session according to claim 1,
whereby the method comprises the further steps of:
providing, at the second, SIP-capable terminal (11), a user interface for selecting and/or for entering IMS-session data, in particular data about a codec, a quality of service or bandwidth of the at least one media-stream (1001) of the IMS-session and
inserting one or more of the selected and/or entered IMS-session data in the at least one SIP-reinvite message (1002).

6. Method of establishing an IMS-session according to claim 1,
whereby the method comprises the further steps of:
holding, at the second, SIP-capable terminal (11), data about one or more first, SIP-incapable terminals, wherein the data about one or more first, SIP-incapable terminals comprises data about a network address and/or IMS-session data, in particular data about a codec, a quality of service or bandwidth, assigned to the respective SIP-incapable terminal (21),
selecting, by means of a user interface, one or more first, SIP-incapable terminals, and
inserting data assigned to the selected one or more SIP-incapable terminals in the at least one SIP-reinvite message (1002).

7. Method of establishing an IMS-session according to claim 1,
whereby the method comprises the further steps of:
receiving via a user interface at the second, SIP-capable terminal (11) data about two or more first, SIP-incapable terminals,
determining, by the second, SIP-capable terminal (11), network addresses and media-streams of the IMS-session associated with the two or more first, SIP-incapable terminals based on the received data, and
sending the network addresses of the two or more first, SIP-incapable terminals as the receiving addresses of the respective associated media-streams of the IMS-session with the at least one SIP-reinvite message
(1002) for establishment of the IMS-session.

8. Method of establishing an IMS-session according to claim 7,
whereby the method comprises the further steps of:
transmitting an audio-stream of the IMS-session to a first, SIP-incapable terminal (21), in particular a radio, a multi-channel audio system or a stereo, adapted to present the audio-stream and a video-stream of the IMS-session to a further first, SIP-incapable terminal (21), in particular a TV-set, adapted to display the video-stream.

9. Method of establishing an IMS-session according to claim 1,
whereby the method comprises the further steps of:
receiving via a user interface at the second, SIP-capable terminal (11) data for terminating the transmission of the at least one media-stream (1001) of the IMS-session to the first, SIP-incapable terminal (21), sending a SIP-signaling message comprising data about the termination or rerouting of transmission of the at least one media-stream (1001) of the IMS-session to the first, SIP-incapable terminal (21), and
terminating the transmission of the at least one media-stream (1001) of the IMS-session to the first, SIP-incapable terminal (21).

10. A SIP-capable terminal (11) with a communication unit for exchanging SIP messages via a communication network (100) for establishing an IMS-session,
whereby the terminal (11) has a control unit adapted to:
establish an IMS-session comprising at least one media-stream (1001) with the SIP-capable terminal (11) associated with a SIP-user (1),
send at least one SIP-reinvite message (1002) comprising a network address of a SIP-incapable terminal (21) or a network address of a media gateway (31) associated with the first, SIP-incapable and IP-incapable terminal (21) as receiving address of at least one media-stream (1001) of the IMS-session, whereby said at least one media-stream (1001) of the IMS-session to the first, SIP-incapable terminal (21) or the media gateway (31) is transmitted through the IP-packed based communication network (100) and the SIP-signaling messages (1000, 2000) of the IMS-session are still exchanged with the SIP-capable terminal (11) associated with the SIP-user (1).
